# EUROPÄISCHE PATENTSCHRIFT

(11) **EP 0 521 860 B1**
(45) Veröffentlichungstag und Bekanntmachung des Hinweises auf die Patenterteilung: **23.11.1994**
(21) Anmeldenummer: 91903301.9
(22) Anmeldetag: 06.02.1991
(51) Int. Cl.: G01R 31/06, G01R 31/00

(54) **VERFAHREN ZUM ÜBERWACHEN VON INDUKTIVEN LASTEN AUF FEHLER**
PROCESS FOR MONITORING FAULTS IN INDUCTIVE LOADS
PROCEDE DE CONTROLE DE DEFAUTS DE CHARGES INDUCTIVES

(30) Priorität: 30.03.1990 DE 4010198
(43) Veröffentlichungstag der Anmeldung: 13.01.1993
(73) Patentinhaber: ROBERT BOSCH GMBH, 70442 Stuttgart (DE)
(72) Erfinder: MÖRBE, Matthias, D-7129 Ilsfeld-Helfenberg (DE); KORNHAAS, Robert, D-7141 Schwieberdingen (DE)
(86) Internationale Anmeldenummer: EP9100223
(87) Internationale Veröffentlichungsnummer: WO9115777

(56) Entgegenhaltungen:
- EP-A- 0 249 448
- DE-A- 3 007 464
- US-A- 4 571 514
- N.T.I.S Tech notes, november1987, Springfield, VA, US Nasa Tech Brief: "Pulse Test of Coil Insulation", page 1068,

## Beschreibung

Verfahren zum Überwachen von induktiven Lasten auf Fehler mit den Merkmalen des Oberbegriffs des Anspruchs 1 sind aus der EP-A- 0 249 448 und der DE-A1 30 07 464 bekannt. Bei der letztgenannten Schrift wird die Ansteuerung und die Überprüfung von der gleichen Steuereinheit durchgeführt, jedoch sind für die beiden Funktionen zwei getrennte Leitungen vorgesehen.

In Regelsystemen z.B. ABS, ASR usw. sind Elektromagnetventile entfernt von dem Steuergerät angeordnet und jeweils über eine Ansteuerleitung mit diesen verbunden.

### Vorteile der Erfindung

Die Erfindung gibt ein Verfahren an, mit dem man die Ventile und ihre Ansteuerleitung auf Fehlerfreiheit ohne zusätzliche Prüfleitung überwachen kann. Diese Überwachung wird über die Ansteuerleitung und die Ansteuerschaltung durchgeführt. Zur Reduzierung der Anzahl der Leitungen werden also auf einer Leitung Ansteuerung und Fehlermeldung übertragen. Eine Fehlerartbestimmung ist über eine definierte Impulsfolge möglich.

### Zeichnung

Anhand von in der Zeichnung dargestellten Ausführungsbeispielen und Diagrammen wird die Erfindung näher erläutert.

Es zeigen:
- Fig. 1: zwei Diagramme
- Fig. 2: ein erstes Ausführungsbeispiel
- Fig. 3: Diagramme
- Fig. 4: ein weiteres Ausführungsbeispiel
- Fig. 5: weitere Diagramme

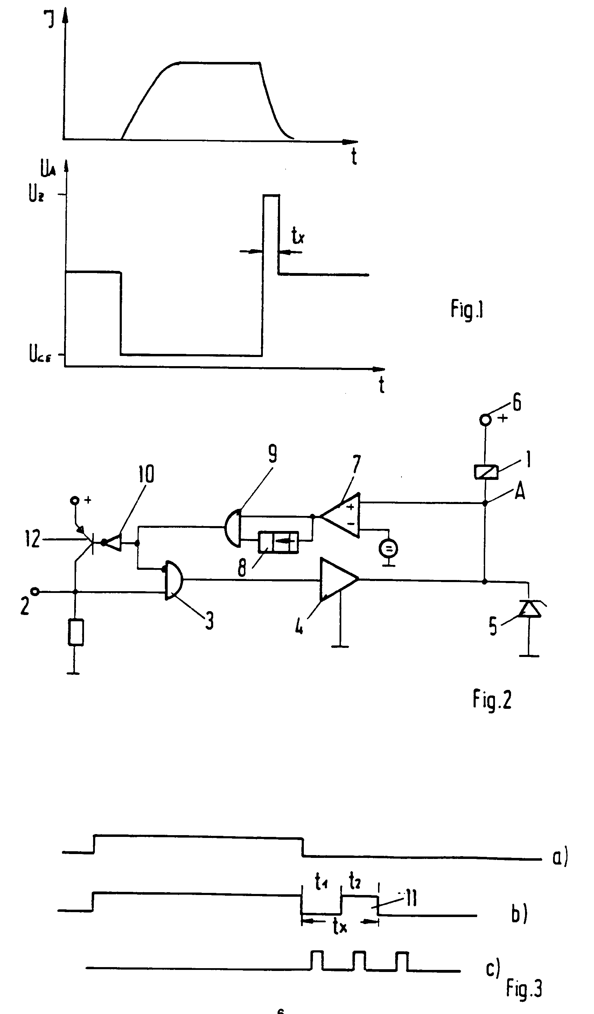

Für die Erfindung ist die beim Schalten von induktiven Lasten entstehende Abschaltspitze ein Maß für den korrekten Zustand der Endstufe. Wird z.B. durch Kurzschluß in der Last oder Windungsschluß die Induktivität kleiner, ändert sich die Länge tx der nach dem Abschalten auftretenden Abschaltspitze. Figur 1 zeigt einerseits den Stromverlauf J bei einem Schaltvorgang, z.B. eines Ventils und zweitens den zugehörigen Spannungsverlauf U_{A} bezogen auf den Punkt A in Figur 2 mit der eingezeichneten Abschaltspitze der Breite tx. In Fig. 2 erfolgt die Ansteuerung eines Elektromagnetventils 1 über eine Eingangsklemme 2, ein Und-Gatter 3, eine Endstufe 4 unter Einbeziehung einer Zenerdiode 5 und einer Batterie 6. Es wird unterstellt, daß ein Rechner das Ventil einerseits zu Regelzwecken zeitweise ansteuert, über die gleiche bei 2 anzuschließende Steuerleitung aber auch das Ventil auf Fehler überwacht.

Bei einem fehlerfreien Ventil 1 entsteht am Ende des Ansteuersignals gemäß Fig. 1 unten die dort dargestellte Abschaltspitze mit der gezeichneten Höhe und Breite tx. In Fig. 3a ist das vom Rechner kommende Ansteuersignal, in Fig. 3b das an der Klemme 2 liegende Signal und in Fig. 3c sind Abfrageimpulse des Rechners aufgezeigt. In Fig. 3b ist die Zeitdauer tx der Abschaltspitze eingezeichnet. Mit dem Entstehen der Abschaltspitze schaltet ein Vergleicher 7 mit einer vorgegebenen Vergleichsspannung durch. Sein Ausgangssignal bewirkt unter Zuhilfenahme eines Zeitglieds 8 mit der Zeitkonstanten t₁ (sh. Fig. 3b) und eines Und-Gatters 9, daß am Eingang eines Inverters 10 ein Signal ansteht, das dem Inpuls 11 der Fig. 3b entspricht. Mittels des Inverters 10 und eines Transistors 12 wird an der Klemme 2 der Impuls 11 erzeugt, wobei die Länge der t₂ durch die Abschaltspitze bzw. deren Abklingen unter die Vergleichsspannung bedingt ist. Bei intakten Ventil entsteht immer der gleiche Impuls 11, der somit ein Zeichen eines intakten Ventils ist.

Während der Zeit t₁ fragt der Rechner durch den ersten Impulse der Fig. 3c das Low-Potential auf der Ansteuerleitung ab und nachfolgend durch den zweiten Impuls das durch eine korrekt breite Abschaltspitze entstehende High-Potential. Danach wird nochmals das Low-Potential abgefragt, um bei eventuell zu breiten Abschaltspitzen durch in Reihe geschalteten Induktivitäten oder andere Fehler eine zusätzliche Information zu erhalten. Dabei ist wesentlich, daß der Ablauf durch die Ansteuerung selbst gesteuert wird und somit keine zusätzliche Interruptbelastung auftritt, und daß für Ansteuerung und Rückmeldung nur eine Leitung benötigt wird.

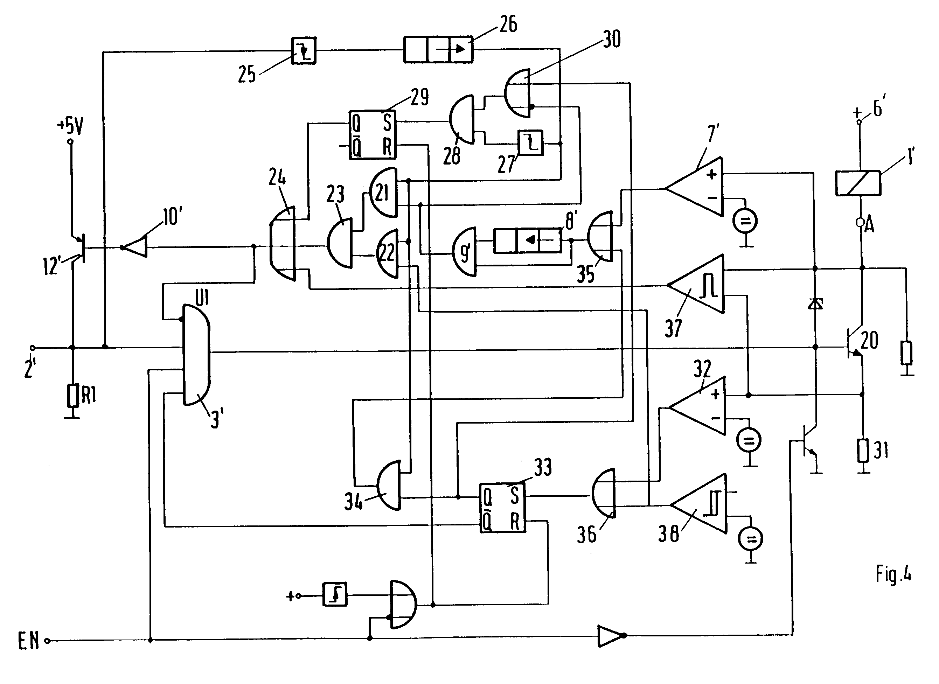

In Fig. 4 ist ein komplettes Ausführungsbeispiel gezeigt, wobei das Ausführungsbeispiel der Fig. 2 voll integriert ist.

Auch hier wird das Ventil 1′von einer Klemme 2′her über ein Und-Gatter 3′angesteuert, wobei hier noch ein Schalttransistor 20 eingeschaltet ist. Dem Vergleicher 7 entspricht der Vergleicher 7′, dem Und-Gatter 9 und dem Zeitglied 8 die Glieder 9′ und 8′ und dem Inverter 10 und dem Transistor 12 die Glieder 10′ und 12′.

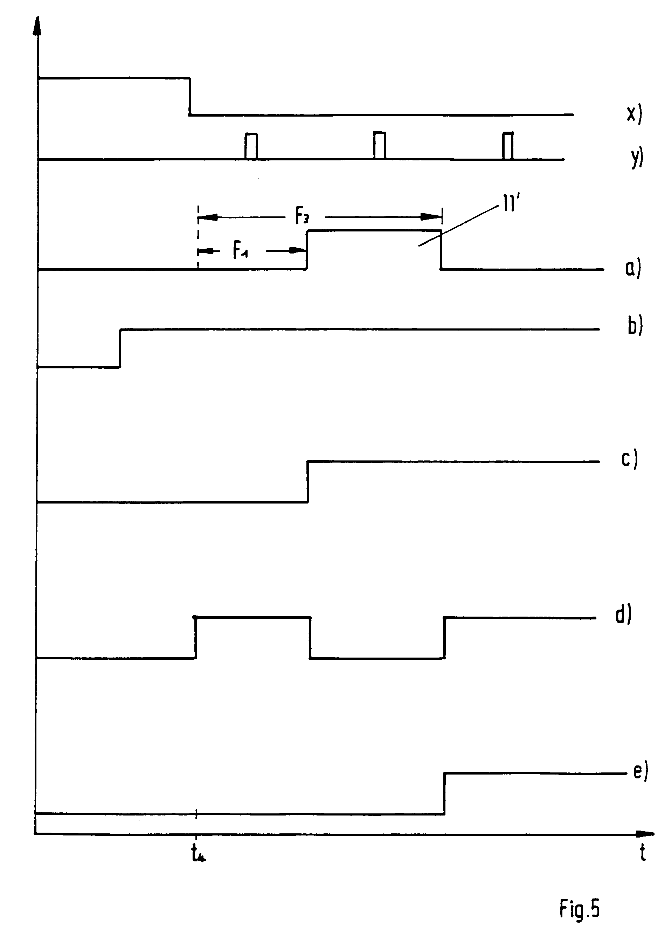

Auch hier entsteht nach dem Abschalten des Ansteuersignals und intakten Ventil an der Klemme 2 ein dem Impuls 11 der Fig. 3b entsprechendes Signal; dieses entsteht jetzt dadurch, daß das Ausgangssignal des Und-Gatters 9′ nach der Zeit t₁ über die Gatter 21, 23 und 24 zum Inverter 10′ und Transistor 12′ gelangt. Das Und-Gatter 21 ist durchlässig, weil das auf die Rückflanke des Ansteuersignal reagierende Glied 25 ein Zeitglied mit der Zeitkonstanten t₃ angestoßen hat. t₃ ist dabei länger als tx. An der Klemme entsteht bei intaktem Ventil 1′ der in Fig. 5a gezeigte Gutaussageimpuls 11′.

Fig. 5 zeigt in Fig. 5x) einen bei t₄ endenden Ansteuerimpuls in Fig. 5y die Abtastimpulse und in den Fig. 5a) - 5e) bei verschiedenen Ventilfehlern erzeugte unterschiedliche Rückmeldesignale (Erkennungssignale).

Tritt im Ventil 1′ ein Windungsschluß auf, so verringert sich die Induktivität und demzufolge auch die Höhe der induzierten Spannung nach dem Sperren des Transistors 20; dadurch verringert sich die Zeit, in der die induzierte und begrenzte Spannung größer ist als die Vergleichsspannung des Vergleichers. Ist diese Zeit kleiner als die Zeit des Zeitglieds 8′, dann bleibt der Ausgang von Gatter 9′ low.

Nach Ablauf der Zeit des Zeitglieds 26 gibt ein Glied 27 einen Impuls an den Eingang des Und-Gatters 28. Durch den invertierten Eingang eines Oder-Gatters 30 ist sein Ausgang eine 1. Hierdurch wird das bistabile Glied 29 gesetzt, dessen Q-Ausgang dann über das Oder-Gatter 24, Inverter 10′ und Transisitor die Klemme 2′ auf High-Signal bringt. Es entsteht die in Fig. 5e dargestellte und unterscheidbare Verlauf.

Tritt während der Ansteuerung ein Kurzschluß im Ventil 1′ auf, so ist die Spannung über dem Widerstand 31 größer als der Spannungswert der Vergleichsspannung eines Vergleichers 32. Hierdurch wird ein bistabiles Glied 33 gekippt, dessen Q̅-Ausgang dann das Und-Gatter 3′ und damit auch Transistor 20 sperrt.

Am Ende der Ansteuerung wird wieder das Zeitglied 26 angestoßen, das das Und-Gatter 34 durchlässig macht. Über ein Oder-Gatter 35 und die Glieder 8′, 9′ wird nach Ablauf von t₁ ein High-Signal erzeugt, das über die Glieder 21, 23, 10 und 12′ auch ein High-Signal an Klemme 2′ einsteuert. Das Und-Gatter 28 ist durch das gekippte bistabile Glied 33 vorbereitet, sodaß es mit Ende der Zeitkonstante des Zeitglieds 26 durchschaltet und das bistabile Glied 29 setzt. Damit bleibt dme Klemme 2′ auf High-Signal. Es entsteht somit der Verlauf der Fig. 5c.

Tritt ein Leitungsabriß am Ventil 1 auf, so wird die dadurch bedingte Spannungsänderung durch einen Vergleicher 37 erkannt. Dieser steuert über die Glieder 24, 10′ und 12′ sofort High-Signal an der Klemme 2′ ein. Dies geschieht auch, wenn der Leitungsbruch während der Ansteuerung auftritt (sh Fig. 5b).

Mittels eines Vergleichers 38 kann auch Übertemperatur am Transistor 20 erkannt werden. Auch hierdurch wird das bistabile Glied 33 gesetzt und damit die Ansteuerung mittels des Und-Gatter 3′ unterbunden.

Durch das Ausgangssignal des Vergleichers 38 und das nach Ansteuerungsende vorhandene Ausgangssignal des Zeitglieds 26 ist das Und-Gatter 22 durchlässig. Dessen Ausgangssignal steuert an der Klemme 2′ über die Glieder 23, 24, 10′ und 12′ High-Signal ein. Das Und-Gatter 34 stößt mit seinem Ausgangssignal das Zeitglied 8′ an; nach Ablauf der Zeitkonstanten des Zeitglieds 8′ gibt das Und-Gatter 9′ ein Signal an das Und-Gatter 21, das damit durchlässig wird. Hierdurch wird das Exklusiv-Oder-Gatter 23 gesperrt und damit Low-Signal an der Klemme 2′ eingesteuert. Dieses dauert, bis am Ende von t₃ des Zeitglieds 26 das Und-Gatter 21 wieder gesperrt wird. Gleichzeitig wird über die Glieder 27-29, 24, 10′ und 12′ wieder ein High-Signal an Klemme 2′ eingesteuert. Es entsteht der in Fig. 5d gezeigte Verlauf.

Man erkennt aus Fig. 5, daß bei den möglichen Fehlern am Ventil von dem Gutaussagesignal der Fig. 5a abweichende und den aufgetretenen Fehler kennzeichnende Erkennungssignale auf der Ansteuerleitung erzeugt werden, die durch die Impulse der Fig. 3c abgetastet und erkannt werden können.

Nicht näher beschrieben wurde die Rücksetzschaltung und die Versorgung.

## Patentansprüche

1. Verfahren zur Überwachung von über Endstufen (4; 20) angesteuerte induktive Lasten (1; 1′) auf Fehler, bei dem nach Beendigung eines über eine Ansteuerleitung (2; 2′) übertragenen Ansteuersignals für die induktive Last (1; 1′) geprüft wird, ob die für die fehlerfreie induktive Last typische Abschaltspitze hinsichtlich ihrer zeitlichen Lage zum Abschaltzeitpunkt und/oder hinsichtlich ihrer Amplitude auftritt, dadurch gekennzeichnet, daß nach einer von der induktiven Last (1; 1′) abhängigen Zeit und bei Vorliegen eines entsprechend großen Signals an der induktiven Last ein Gutaussagesignal auf der Ansteuerleitung (2; 2′) erzeugt wird und daß zu Sollzeitpunkten abgetastet wird, ob das Gutaussagesignal auf der Steuerleitung zu wenigstens einem Sollzeitpunkt vorhanden und zu wenigstens einem weiteren Sollzeitpunkt nicht vorhanden ist.

2. Verfahren nach Anspruch 1, dadurch gekennzeichnet, daß das Gutaussagesignal endet, wenn die Amplitude der Abschaltspitze einen Sollwert unterschreitet.

3. Verfahren nach Anspruch 1, dadurch gekennzeichnet, daß das Gutaussagesignal nach einer vorgegebenen Zeit endet.

4. Verfahren nach einem der Ansprüche 1 bis 3, dadurch gekennzeichnet, daß durch Spannungsüberwachung in der Ansteuerphase ein Kurzschluß erkannt wird und daß nach der Ansteuerung ein erstes Erkennungssignal in die Ansteuerleitung eingekoppelt wird.

5. Verfahren nach einem der Ansprüche 1 bis 4, dadurch gekennzeichnet, daß durch Spannungsüberwachung ein Leitungsabriß erkannt wird, und daß nach der Ansteuerung ein zweites Erkennungssignal in die Ansteuerleitung eingekoppelt wird.

6. Verfahren nach einem der Ansprüche 1 bis 5, dadurch gekennzeichnet, daß Übertemperatur an dem Endstufen-Transistor (20) erkannt wird und daß nach der Ansteuerung ein weiteres Erkennungssignal in die Ansteuerleitung eingekoppelt wird.

7. Verfahren nach einem der Ansprüche 1 bis 6, dadurch gekennzeichnet, daß die induktive Last ein Elektromagnetventil (1; 1′) ist, daß die Ansteuerleitung (2; 2′) ein Steuergerät eines Regelsystems mit dem Elektromagnetventil (1; 1′) verbindet und daß das Steuergerät zeitweise das Elektromagnetventil (1; 1′) überwacht.

## Claims

1. Process for monitoring inductive loads (1; 1′) driven via high level stages (4; 20) for faults, in which after the ending of a drive signal for the inductive load (1; 1′) which is transmitted via a control line (2; 2′), a check is made as to whether the cut-off peak typical for the fault-free inductive load, with regard to its position in time vis-a-vis the cut-off time and/or with regard to its amplitude, occurs, characterised by the fact that after a period, which is dependent on the inductive load (1; 1′), and given the existence of a correspondingly large signal on the inductive load, a verification signal is produced on the control line (2; 2′), and that at set times, sampling is carried out to ascertain whether the verification signal is present on the control line at no less than one set point in time and that it is absent at no less than one further set point in time.

2. Process in accordance with claim 1, characterised by the fact that the verification signal ends when the amplitude of the cut-off peak falls to below a set-point value.

3. Process in accordance with claim 1, characterised by the fact that the verification signal ends after a predetermined time.

4. Process in accordance with one of the claims 1 to 3, characterised by the fact that through voltage monitoring in the triggering phase, a short circuit is detected, and that after the triggering, a first recognition signal is coupled into the control line.

5. Process in accordance with one of the claims 1 to 4, characterised in that through voltage monitoring, a line break is detected, and that after the triggering, a second recognition signal is coupled into the control line.

6. Process in accordance with one of the claims 1 to 5, characterised by the fact that excess temperature is detected at the high level stage transistor (20) and that after the triggering, a further recognition signal is coupled into the control line.

7. Process in accordance with one of the claims 1 to 6, characterised in that the inductive load is a solenoid valve (1; 1′), that the control line (2; 2′) connects a controller of a control system with the solenoid valve (1; 1′), and that the controller monitors the solenoid valve (1; 1′) periodically.

## Revendications

1. Procédé pour détecter les défauts de charge inductives (1 ; 1′) commandé par des étages de sortie (4, 20) selon lequel, à la fin d'un signal de commande transmis par une ligne de commande (2, 2′) pour la charge inductive (1, 1′) on vérifie si la pointe de coupure caractéristique d'une charge inductive sans défaut se produit dans le temps par rapport à l'instant de la coupure et/ou pour l'amplitude, caractérisé en ce qu'après un temps dépendant de la charge inductive (1, 1′) et en présence d'un signal important correspondant sur la charge inductive, on crée un signal d'émission de la qualité de la ligne de commande (2, 2′) et à des instants de consigne, on détecte si le signal de qualité de la ligne de commande existe en au moins un instant de consigne et s'il n'est pas présent au moins en un autre instant de consigne.

2. Procédé selon la revendication 1, caractérisé en ce que le signal de qualité se termine lorsque l'amplitude de la pointe de coupure passe en-dessous d'une valeur de consigne.

3. Procédé selon la revendication 1, caractérisé en ce que le signal de qualité se termine après un temps prédéterminé.

4. Procédé selon l'une des revendications 1 à 3, caractérisé en ce qu'en surveillant la tension phase de commande on détecte un court-circuit et en ce qu'après la commande on injecte un premier signal de reconnaissance dans la ligne de commande.

5. Procédé selon l'une des revendications 1 à 4, caractérisé en ce qu'en surveillant la tension on détecte une coupe de ligne et en ce qu'après la commande on injecte un second signal de reconnaissance dans la ligne de commande.

6. Procédé selon l'une des revendications 1 à 5, caractérisé en ce qu'on reconnaît une température excessive du transistor (20) de l'étage de sortie et en ce qu'après la commande on injecte un autre signal de reconnaissance dans la ligne de commande.

7. Procédé selon l'une des revendications 1 à 6, caractérisé en ce que la charge inductive est une soupape électromagnétique (1, 1′), la ligne de commande (2, 2′) est un appareil de commande d'un système de régulation relié à la soupape électromagnétique (1, 1′) et en ce que l'appareil de commande surveille de temps à autre la soupape électromagnétique (1, 1′).
